(19) Europäisches Patentamt
European Patent Office
Office européen des brevets

(11) Veröffentlichungsnummer: **0 318 779 B1**

(12) **EUROPÄISCHE PATENTSCHRIFT**

(45) Veröffentlichungstag der Patentschrift: **01.02.95**

(51) Int. Cl.$^{6}$: **B32B 27/32**, H01G 4/18

(21) Anmeldenummer: **88119285.0**

(22) Anmeldetag: **21.11.88**

(54) **Coextrudierte, biaxial orientierte Mehrschichtfolie.**

(30) Priorität: **28.11.87 DE 3740449**

(43) Veröffentlichungstag der Anmeldung:
**07.06.89 Patentblatt 89/23**

(45) Bekanntmachung des Hinweises auf die Patenterteilung:
**01.02.95 Patentblatt 95/05**

(84) Benannte Vertragsstaaten:
**BE DE ES FR GB IT NL**

(56) Entgegenhaltungen:
**EP-A- 0 008 623**
**EP-A- 0 222 296**

(73) Patentinhaber: **HOECHST AKTIENGESELLSCHAFT**

**D-65926 Frankfurt (DE)**

(72) Erfinder: **Bothe, Lothar, Dr.**
**Kurt-Schumacher-Strasse 69E**
**D-6500 Mainz-Gonsenheim (DE)**
Erfinder: **Crass, Günther**
**Bachstrasse 7**
**D-6204 Taunusstein 4 (DE)**
Erfinder: **Schlögl, Gunter, Dr.**
**Finkenweg 2**
**D-6233 Kelkheim (DE)**
Erfinder: **Wilhelm, Thomas, Dr.**
**Justinus-Kerner-Strasse 18**
**D-7519 Sulzfeld (DE)**

**EP 0 318 779 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf eine coextrudierte, biaxial orientierte Mehrschichtfolie von der im Oberbegriff des Anspruchs 1 genannten Art und auf ihre Verwendung.

Der Einsatz von Kunststoffolien als Elektroisoliermaterial ist seit langem bekannt. Diese Folien werden sowohl als Dielektrikum in Kondensatoren als auch für Kabelisolierungen oder als selbstklebende Isolierbänder verwendet. Die Anforderungen an die elektrischen Eigenschaften solcher Folien sind sehr hoch. Neben einem niedrigen dielektrischen Verlustfaktor und einer hohen Durchschlagfestigkeit wird eine hohe zeitliche Konstanz dieser Kenndaten gefordert, insbesondere auch bei erhöhten Temperaturen.

Eine Reihe von Druckschriften beschäftigt sich mit biaxial orientierten Polypropylenfolien, die über eine besonders hohe Durchschlagfestigkeit verfügen sollen. Die gute Durchschlagfestigkeit wird meist durch Einsatz von Polypropylenrohstoffen erreicht, die ganz spezielle Eigenschaften besitzen sollen.

So wird in der EP-A-0 011 796 eine biaxial orientierte Polypropylenfolie zur Verwendung als Elektroisolierfolie beschrieben, die aus zwei Schichten besteht und in metallisierter Form zur Herstellung von Kondensatoren verwendet wird. Der Rohstoff für diese Elektroisolierfolie ist hochreines Polypropylen mit einem Restaschebestandteil von weniger als 100 ppm, das frei von organischen oder anorganischen Gleitmitteln ist und keine ionogenen Bestandteile enthält.

Aus der EP-A-0 222 296 ist eine coextrudierte, biaxial orientierte Mehrschichtfolie bekannt geworden, bei der die Basisschicht ebenfalls aus hochreinem Elektrofolienrohstoff auf Basis von Propylenpolymeren besteht. Zur Verbesserung ihrer elektrischen Eigenschaften bei ihrer Verwendung als Dielektrikum in Kondensatoren soll der Stabilisatorgehalt der Deckschicht(en) wesentlich höher sein als der Stabilisatorgehalt der Basisschicht. Unter Stabilisatoren sind im Zusammenhang mit Elektroisolierfolien aus Kunststoffen spezielle Verbindungen zu verstehen, welche die Oxidationserscheinungen und damit die Zeitabhängigkeit des dielektrischen Verlustfaktors und der elektrischen Durchschlagfestigkeit verringern, wenn diese Folien als Dielektrikum in Verbindung mit dünnen Metallschichten als Elektroden in Kondensatoren eingesetzt werden.

Der vorliegenden Erfindung liegt die Aufgabe zugrunde, eine Elektroisolierfolie mit niedrigem dielektrischen Verlustfaktor, hoher Durchschlagfestigkeit und einem verbesserten Langzeitverhalten anzugeben. Die Folie sollte ohne Verfahrensänderung nach bekannten Methoden herstellbar sein und sowohl für KP- (Film-Folien-Kondensatoren) als auch für MKP-Kondensatoren (Kondensatoren aus metallisierter Polypropylenfolie) verwendet werden können.

Diese Aufgabe wird gelöst durch die Mehrschichtfolie mit den in Anspruch 1 genannten Merkmalen. Die abhängigen Ansprüche geben zweckmäßige Weiterbildungen der Folie an. Die Aufgabe wird ferner gelöst durch die in Anspruch 12 genannte Verwendung.

Die Basisschicht der Mehrschichtfolie besteht aus einem hochreinen Rohstoff, der frei von Gleitmitteln ist und keine ionogenen Bestandteile enthält. Vorzugsweise ist sein Restaschegehalt kleiner als 50 ppm und sein Chlorgehalt kleiner als 10 ppm. Sein Gehalt an organischen Neutralisationsmitteln, insbesondere Calciumstearat, ist 0 bis 0,01 Gew.-%. Dieser Rohstoff ist mit einem geeigneten Stabilisatorsystem derartig stabilisiert, daß er eine idealisierte Thermooxidationstemperatur (gemessen mit einem Differentialkalorimeter bei einer Aufheizrate von 20 K/min) zwischen 260 und 300, insbesondere 260 bis 280 °C, aufweist. Ebenso ist der Deckschichtrohstoff in der Weise stabilisiert, daß er eine idealisierte Thermooxidationstemperatur, bestimmt nach der gleichen Methode, zwischen 240 und 300, insbesondere 240 bis 270 °C, aufweist. Die Stabilisierung der beiden Rohstoffe wird dabei so abgestimmt, daß die Folie selbst eine idealisierte Thermooxidationstemperatur von 250 bis 290, insbesondere 250 bis 275 °C, aufweist.

Die Bestimmung der idealisierten Thermooxidationstemperatur erfolgt auf folgende Weise:
2 bis 5 mg des zu untersuchenden Rohstoffs bzw. der zu untersuchenden Folie werden in einem Differentialkalorimeter mit einer Heizrate von 20 K/min aufgeheizt. Als Spülgas wird Luft verwendet, die Ausgangstemperatur ist 295 K. In Figur 1 ist die Veränderung des Wärmeflusses ("heat flow") mit ansteigender Temperatur dargestellt. Während diese Kurve zunächst nahezu waagerecht verläuft (Basislinie), steigen diese Werte infolge Oxidation ab einer bestimmten Temperatur stark an (exothermer Ast). Die idealisierte Thermooxidationstemperatur wird wie in Figur 1 gezeigt aus dem Schnittpunkt der den exothermen Ast des Thermogramms verlängernden Geraden mit der Basislinie bestimmt.

Es wurde gefunden, daß die Folie mit diesem Aufbau eine hohe zeitliche Konstanz des dielektrischen Verlustfaktors auch bei erhöhten Temperaturen besitzt. Ebenso ist die Durchschlagfestigkeit sowohl bei Gleich- als auch bei Wechselspannungsbelastung sehr hoch und bleibt über einen längeren Zeitraum auch bei erhöhten Temperaturen stabil. Entgegen den Erwartungen wurde gefunden, daß der dielektrische Verlustfaktor trotz der zur Erzielung der notwendigen Thermooxidationstemperaturen erforderlichen hohen Stabilisierung nicht unakzeptabel groß wird, insbesondere wenn sowohl Basis- als auch Deckschichtrohstoff

einen Aschegehalt kleiner 50 ppm und einen Chlorgehalt kleiner 10 ppm aufweisen.

In einer Ausführungsform der Erfindung besteht die Mehrschichtfolie aus zwei Deckschichten (ABA-Aufbau). Der hierzu verwendete Deckschichtrohstoff hat eine relativ niedrige idealisierte Thermooxidationstemperatur, insbesondere 240 bis 250 °C, wenn zu erwarten ist, daß die Elektroisolierfolie mit Substanzen, insbesondere mit den bei Folienkondensatoren üblichen Imprägnierflüssigkeiten, in Berührung kommt, bei denen die Gefahr einer Extraktion des Stabilisators und einer damit einhergehenden Verschlechterung der dielektrischen Kenndaten besteht.

Wird eine der beiden Oberflächen der Folie mit einer aufgedampften Metallschicht versehen, so zeigt die Mehrschichtfolie zweckmäßigerweise nur eine Deckschicht (AB-Aufbau), wobei sich diese Deckschicht auf der nicht metallisierten Seite befindet. Der Deckschichtrohstoff besitzt eine relativ hohe idealisierte Thermooxidationstemperatur, insbesondere 255 bis 270 °C, wenn ein Kontakt mit Stabilisator extrahierenden Substanzen nicht zu erwarten ist und ein gutes Mikroprofil der Folie erwünscht ist.

Die Stabilisatoren sind dabei aus den Stoffklassen der sterisch gehinderten Phenole, Phosphite, Thioether, Phosphonite oder Mischungen dieser Stoffe ausgewählt, wobei die ersten beiden Stoffklassen besonders bevorzugt sind. Werden phenolische Stabilisatoren verwendet, so wird deren Molmasse zweckmäßig größer als 300 g/Mol, insbesondere größer als 700 g/Mol, gewählt. Eine umfassende Zusammenstellung von Stabilisatoren für Polypropylen wird von T.J. Henman in der Publikation "World Index of Polyolefine Stabilizers", Kogan Page Ltd., London, 1982, gegeben. Geeignete Verbindungen werden insbesondere in der EP-A-0 222 296 beschrieben. Sie führen zu einer besseren Zeitkonstanz des dielektrischen Verlustfaktors und der elektrischen Durchschlagfestigkeit der Folie, wenn sie in einem Kondensatorwickel eingesetzt wird.

Zur Herstellung der Mehrschichtfolie werden die Schmelzen der die Schichten bildenden Polymeren durch eine Flachdüse coextrudiert, die durch Coextrusion erhaltene mehrschichtige Folie durch Abkühlen verfestigt, anschließend bei einer Temperatur von beispielsweise 120 bis 150 °C im Verhältnis von 5:1 bis 7:1 längsgestreckt und bei einer Temperatur von beispielsweise 160 bis 170 °C im Verhältnis von 8:1 bis 10:1 quergestreckt. Zuletzt wird die biaxial gestreckte Folie beispielsweise bei 150 bis 165 °C thermofixiert. Die Verfahrensdurchführung erfolgt in der Weise, daß ihre Rauhigkeit $R_z$ kleiner/gleich 1,5 $\mu$m ist und insbesondere im Bereich von 0,07 bis 0,5 $\mu$m liegt, wobei die beiden Deckschichten gleiche oder unterschiedliche Rauhigkeit aufweisen können. Geeignete Rauhigkeiten sind ebenfalls in der EP-A-0 222 296 angegeben.

Als Propylenpolymere können neben Polypropylen auch Polymermischungen aus Polypropylen und anderen Polyolefinen, insbesondere HDPE, LDPE, LLDPE oder Poly-4-methyl-penten-1, wobei der Anteil der anderen Polyolefine gewöhnlich 15 Gew.-%, bezogen auf das Gesamtgewicht der Polymermischung, nicht übersteigt, oder Blockcopolymere des Propylens, insbesondere mit Ethylen, oder statistische Copolymere des Propylens, insbesondere mit Ethylen, eingesetzt werden. Bei den Copolymeren beträgt die neben dem Propylen vorhandene Comonomer-Menge im allgemeinen maximal 10 Gew.-%, bezogen auf das Copolymer. Bei den Deckschichten handelt es sich in der Regel um das gleiche Propylenpolymere, wie es für die Basisschicht verwendet wird.

Die Stabilisierung von Basis- und Deckschicht wird entsprechend den zu erzielenden idealisierten Thermooxidationstemperaturen eingestellt, die notwendige Menge an Stabilisator ist durch diese Temperaturen vorgegeben und wird je nach Stabilisatortyp unterschiedlich sein. Im allgemeinen wird ein Stabilisatorgehalt von 0,8 Gew.-% in der Mehrschichtfolie nicht überschritten, wobei der Stabilisatorgehalt in der Deckschicht nie größer ist als in der Basisschicht. In bevorzugter Ausführungsform ist der Stabilisatorgehalt in der Deckschicht wesentlich geringer als in der Basisschicht, insbesondere beträgt er maximal nur 50 Gew.-% des Anteils des Stabilisators in der Basisschicht.

Der Einsatz der erfindungsgemäß hergestellten Folie erfolgt sowohl in KP- als auch in MKP-Kondensatoren, bevorzugt in Kondensatoren für solche Anwendungen, bei denen eine hohe zeitliche Konstanz der elektrischen und dielektrischen Kennwerte auch bei erhöhten Temperaturen gefordert wird.

Die Erfindung wird durch die folgenden Beispiele näher erläutert. Die idealisierte Thermooxidationstemperatur der in den Beispielen verwendeten Rohstoffe wird durch Zusatz von 1,3,5-Trimethyl-2,4,6-tris (3,5-di-tert.-butyl-4-hydroxybenzyl)benzol (vgl. nachstehende Formel) als Stabilisator erreicht.

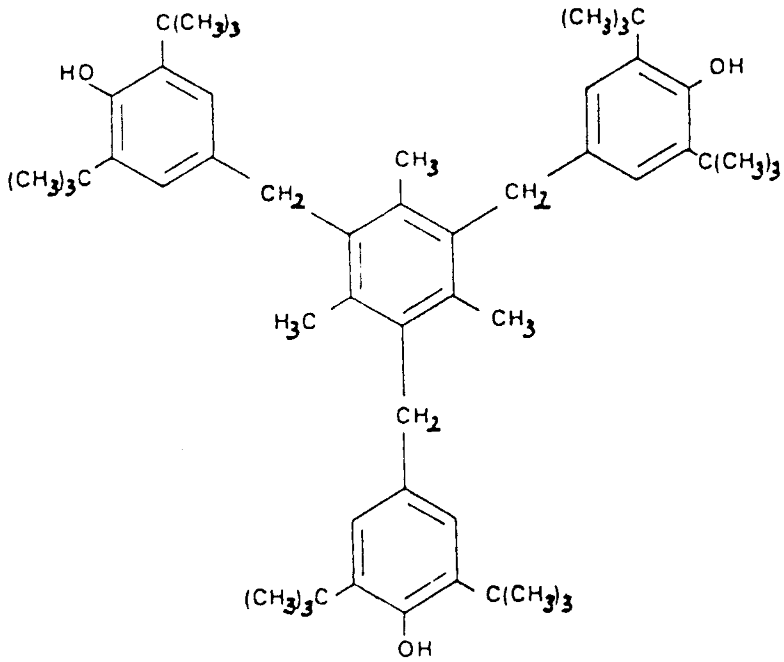

Aus der Tabelle I ergibt sich die Abhängigkeit der idealisierten Thermooxidationstemperatur vom Anteil dieses Stabilisators im Rohstoff. Der Stabilisatorgehalt ist in Gew.-%, bezogen auf das Gesamtgewicht des Rohstoffs, angegeben. Diese Abhängigkeit ist ferner im Diagramm dargestellt. In den folgenden Beispielen wurden Rohstoffe mit diesem Stabilisator eingesetzt. Die hergestellten Folien zeigen alle ABA-Aufbau. Prozentangaben beziehen sich auf Gew.-%.

Tabelle I

| Muster-Nr. | Stabilisatorgehalt (%) | idealisierte Thermooxidationstemperatur (°C) |
|---|---|---|
| 1 | 0,05 | 238 |
| 2 | 0,10 | 245 |
| 3 | 0,15 | 251 |
| 4 | 0,20 | 255 |
| 5 | 0,25 | 257 |
| 6 | 0,30 | 261 |
| 7 | 0,50 | 270 |

Beispiel 1

Zur Herstellung einer biaxial orientierten coextrudierten Folie wurde ein Basisrohstoff aus Polypropylen mit einer idealisierten Thermooxidationstemperatur von etwa 261 °C und ein Deckschichtrohstoff aus Polypropylen mit einer idealisierten Thermooxidationstemperatur von ebenfalls etwa 261 °C verwendet. Der Chlorgehalt beider Rohstoffe betrug 4 ppm, der Gehalt an Calciumstearat war kleiner 0,01 %. Der n-Heptanlösliche Anteil betrug jeweils 4 %. Basis- und Deckschichtrohstoff wurden durch eine Flachdüse coextrudiert, nach dem Abkühlen wurde die Folie in Längsrichtung und anschließend in Querrichtung verstreckt und zuletzt thermofixiert. Die so erhaltene dreischichtige Folie hatte eine Gesamtdicke von 10 µm, wovon 8 µm auf die Basisschicht und je 1 µm auf jede einzelne Deckschicht entfielen. Eine Coronavorbehandlung erfolgte nicht.
Die idealisierte Thermooxidationstemperatur der Mehrschichtfolie betrug 259 °C.

Beispiel 2

Eine biaxial orientierte coextrudierte zweischichtige Folie wurde analog zu Beispiel 1 hergestellt. Der verwendete Basisrohstoff wies eine idealisierte Thermooxidationstemperatur von etwa 261 °C, der Deckschichtrohstoff eine idealisierte Thermooxidationstemperatur von etwa 245 °C auf. Der Chlorgehalt beider Rohstoffe betrug 4 ppm, der Gehalt an Calciumstearat war kleiner 0,01 %.
Die idealisierte Thermooxidationstemperatur der Folie betrug 258 °C.

Vergleichsbeispiel 1

Eine biaxial orientierte coextrudierte zweischichtige Folie wurde analog zu Beispiel 1 hergestellt. Der verwendete Basisrohstoff, ebenso wie der Deckschichtrohstoff, bestand aus Polypropylen und wies eine idealisierte Thermooxidationstemperatur von etwa 261 °C auf. Der Chlorgehalt betrug 40 ppm, der Gehalt an Calciumstearat 0,1 %. Die idealisierte Thermooxidationstemperatur der Folie betrug 259 °C.

Vergleichsbeispiel 2

Eine biaxial orientierte coextrudierte zweischichtige Folie wurde analog zu Beispiel 1 hergestellt. Der verwendete Basisrohstoff wies eine idealisierte Thermooxidationstemperatur von 261 °C, der Deckschichtrohstoff eine idealisierte Thermooxidationstemperatur von etwa 238 °C auf. Beide bestanden aus Polypropylen. Der Chlorgehalt beider Rohstoffe betrug 40 ppm, der Gehalt an Calciumstearat 0,1 %.
Die idealisierte Thermooxidationstemperatur der Folie betrug 255 °C.

Vergleichsbeispiel 3

Eine biaxial orientierte coextrudierte zweischichtige Folie wurde analog zu Beispiel 1 hergestellt. Der verwendete Basisrohstoff, ebenso wie der Deckschichtrohstoff, bestand aus Polypropylen und wies eine idealisierte Thermooxidationstemperatur von etwa 238 °C auf. Der Chlorgehalt beider Rohstoffe betrug 4 ppm, der Gehalt an Calciumstearat war kleiner als 0,01 %.
Die idealisierte Thermooxidationstemperatur der Folie betrug 228 °C.

Vergleichsbeispiel 4

Eine biaxial orientierte coextrudierte zweischichtige Folie wurde analog zu Beispiel 1 hergestellt. Der verwendete Basisrohstoff wies eine idealisierte Thermooxidationstemperatur von etwa 238 °C auf, der Deckschichtrohstoff hatte eine idealisierte Thermooxidationstemperatur von etwa 245 °C. Der Chlorgehalt beider Rohstoffe betrug 4 ppm, der Gehalt an Calciumstearat 0,01 %.
Die idealisierte Thermooxidationstemperatur der Folie betrug 230 °C.

Die elektrischen Kenngrößen der einzelnen Folien sind in der Tabelle II vergleichend gegenübergestellt.

Es bedeutet

| | |
|---|---|
| DZ | die Dielektrizitätszahl, gemessen bei 10 kHz, |
| tan $\delta$ | der dielektrische Verlustfaktor, gemessen bei 10 kHz, |
| DW | den Durchgangswiderstand in der Einheit Ohm•cm, |
| $E_{D,O}$ | die Gleichspannungsfestigkeit ohne Lagerung, Einheit kV/mm, |
| $E_{D,1000}$ | die Gleichspannungsfestigkeit nach 1000 Stunden Lagerung bei 120 °C, Einheit kV/mm, |
| $\Delta$ $E_D$ | die Änderung der Gleichspannungsfestigkeit in Prozent. |

Die Messungen von Dielektrizitätszahl, tan $\delta$ (gemessen bei 10 kHz) und Durchgangswiderstand wurden bei 120 °C durchgeführt, die Messung der Durchschlagfestigkeit bei 25 °C.

Wie aus der Tabelle II ersichtlich, weisen die Vergleichsbeispiele 1 und 2 einen dielektrischen Verlustfaktor auf, der oberhalb der für Kondensatoranwendungen noch akzeptablen Grenze von $2{,}0 \cdot 10^{-4}$ liegt. Die dielektrischen Kenngrößen ebenso wie die Durchschlagfestigkeit der Vergleichsbeispiele 3 und 4 sind zwar hervorragend, verschlechtern sich jedoch nach Lagerung bei erhöhten Temperaturen rapide.

Demgegenüber weisen die erfindungsgemäßen Beispiele 1 und 2 gute Werte sowohl vor als auch nach Lagerung bei 120 °C auf.

Die voranstehend beschriebene Mehrschichtfolie wird als Dielektrikum in einem elektrischen Folienkondensator verwendet, der im allgemeinen aus zwei derartigen Mehrschichtfolien und zwei Metallfolien aufgebaut ist, wobei die letzteren als Elektroden dienen. Die Folien bilden zusammen den Kondensatorwickel.

Tabelle II

Elektrische Kenngrößen der hergestellten Folien

| | DZ | tan $\delta$ | DW | $E_{D,O}$ | $E_{D,1000}$ | $\Delta E_D$ |
|---|---|---|---|---|---|---|
| Beispiel 1 | 2,23 | $1,4 \cdot 10^{-4}$ | $1,5 \cdot 10^{16}$ | 713 | 650 | 8,8 |
| Beispiel 2 | 2,23 | $1,1 \cdot 10^{-4}$ | $5,7 \cdot 10^{15}$ | 688 | 652 | 5,2 |
| Vergleichs-beispiel 1 | 2,23 | $3,7 \cdot 10^{-4}$ | $2,3 \cdot 10^{16}$ | 544 | 530 | 2,5 |
| Vergleichs-beispiel 2 | 2,23 | $4,0 \cdot 10^{-4}$ | $5,6 \cdot 10^{15}$ | 618 | 543 | 10,5 |
| Vergleichs-beispiel 3 | 2,24 | $0,9 \cdot 10^{-4}$ | $4,5 \cdot 10^{15}$ | 662 | 491 | 25,8 |
| Vergleichs-beispiel 4 | 2,23 | $0,9 \cdot 10^{-4}$ | $6,0 \cdot 10^{15}$ | 705 | 521 | 26,0 |

## Patentansprüche

**1.** Coextrudierte, biaxial orientierte Mehrschichtfolie mit einer Basisschicht aus hochreinem Elektrofolienrohstoff und ein- oder beidseitigen Deckschichten, wobei die Basisschicht und die Deckschicht(en) Propylenpolymere und Stabilisatoren für die Propylenpolymeren enthalten, dadurch gekennzeichnet, daß der Rohstoff der Basisschicht eine idealisierte Thermooxidationstemperatur im Bereich von 260 bis 300 ° C, vorzugsweise 260 bis 280 ° C, der Rohstoff der Deckschicht(en) eine idealisierte Thermooxidationstemperatur im Bereich von 240 bis 300 ° C, vorzugsweise 240 bis 270 ° C, und die Mehrschichtfolie in ihrer Gesamtheit eine idealisierte Thermooxidationstemperatur von 250 bis 290 ° C, insbesondere 250 bis 275 ° C, aufweist, und daß der Gehalt an organischen Neutralisationsmitteln, insbesondere Calciumstearat, in den Rohstoffen kleiner/gleich 100 ppm ist und,

daß der Stabilisatorgehalt in der (den) jeweiligen Deckschicht(en) gleich, oder kleiner, insbesondere 50 Gew.-% oder weniger, bezogen auf den Stabilisatorgehalt in der Basisschicht, ist.

2. Mehrschichtfolie nach Anspruch 1 dadurch gekennzeichnet, daß die Rohstoffe für die Basis- und Deckschicht(en) aus hochreinem Polypropylen oder aus einer Polymermischung von Polypropylen und anderen Polyolefinen, insbesondere HDPE, LDPE, LLDPE oder Poly-4-methyl-penten-1, oder aus Blockcopolymeren oder statistischen Copolymeren des Propylens, insbesondere mit Ethylen, bestehen.

3. Mehrschichtfolie nach Anspruch 1 oder 2, dadurch gekennzeichnet, daß die Stabilisatoren für den Rohstoff der Basis- und Deckschichten aus den Stoffklassen der Thioether und/oder Phosphonite, vorzugsweise der sterisch gehinderten Phenole und/oder Phosphite, oder Mischungen dieser Stoffe ausgewählt sind.

4. Mehrschichtfolie nach Anspruch 3, dadurch gekennzeichnet, daß das sterisch gehinderte Phenol eine Molmasse größer als 300 g/Mol, insbesondere größer als 700 g/Mol, aufweist.

5. Mehrschichtfolie nach Anspruch 4, dadurch gekennzeichnet, daß ihr Gehalt an weiteren organischen Additiven mit einer Molmasse von kleiner als 700 g/Mol höchstens 0,1 Gew.-% beträgt.

6. Mehrschichtfolie nach einem der Ansprüche 1 bis 5, dadurch gekennzeichnet, daß ihr Restaschegehalt kleiner als 50 ppm ist.

7. Mehrschichtfolie nach einem der Ansprüche 1 bis 6, dadurch gekennzeichnet, daß ihr Chlorgehalt kleiner als 10 ppm ist.

8. Mehrschichtfolie nach einem der Ansprüche 1 bis 7, dadurch gekennzeichnet, daß die Gesamtdicke der Mehrschichtfolie 3 bis 30 µm, bevorzugt 4 bis 15 µm, beträgt.

9. Mehrschichtfolie nach Anspruch 8, dadurch gekennzeichnet, daß die Deckschichten jeweils eine Dicke von 0,3 bis 2,0 µm, insbesondere von 0,4 bis 0,8 µm, haben und vorzugsweise etwa gleich dick sind.

10. Mehrschichtfolie nach Anspruch 8 oder 9, dadurch gekennzeichnet, daß die Rauhigkeit $R_z$ kleiner/gleich 1,5 µm ist und insbesondere im Bereich von 0,07 bis 0,5 µm liegt und daß die beiden Oberflächen gleiche oder unterschiedliche Rauhigkeit aufweisen.

11. Mehrschichtfolie nach einem der Ansprüche 1 bis 10, gekennzeichnet durch eine zusätzliche äußere Metallschicht.

12. Verwendung der Mehrschichtfolie nach einem der Ansprüche 1 bis 11 als Elektroisolierfolie, insbesondere als Dielektrikum in einem elektrischen Folienkondensator.

**Claims**

1. A coextruded, biaxially oriented multilayer film having a base layer comprising an extremely pure raw material suitable for electrical foils and an outer layer on one or both sides, where the base layer and the outer layer or layers contain propylene polymers and stabilizers for propylene polymers, wherein the raw material for the base layer has an idealized thermal oxidation temperature in the range of 260 to 300 °C, preferably in the range of 260 to 280 °C, the raw material for the outer layer or layers has an idealized thermal oxidation temperature in the range of 240 to 300 °C, preferably in the range of 240 to 270 °C, and the multilayer film as a whole has an idealized thermal oxidation temperature in the range of 250 to 290 °C, in particular in the range of 250 to 275 °C, and wherein the content of organic neutralizing agents, in particular calcium stearate, in the raw materials is less than or equal to 100 ppm, and wherein the stabilizer content of the outer layer or layers is equal to or less than that of the base layer, in particular 50% by weight or less, based on the stabilizer content of the base layer.

2. A multilayered film as claimed in claim 1, wherein the raw materials for the base layer and the outer layer or layers comprise extremely pure polypropylene or a polymer mixture of polypropylene with other polyolefins, especially HDPE, LDPE, LLDPE or poly-4-methyl-1-pentene, or block copolymers or random copolymers of propylene, especially with ethylene.

3. A multilayer film as claimed in claim 1 or 2, wherein the stabilizers for the raw material for the base and outer layers are selected from the classes of substances which include thioethers and/or phosphonites, in particular the sterically hindered phenols and/or phosphites, or mixtures of these substances.

4. A multilayer film as claimed in claim 3, wherein the sterically hindered phenol has a molecular weight greater than 300 g/mol, in particular greater than 700 g/mol.

5. A multilayer film as claimed in claim 4, wherein its content of other organic additives having a molecular weight below 700 g/mol is a maximum of 0.1% by weight.

6. A multilayer film as claimed in any one of claims 1 to 5, wherein the residual ash content is less than 50 ppm.

7. A multilayer film as claimed in any one of claims 1 to 6, wherein the chlorine content is less than 10 ppm.

8. A multilayer film as claimed in any one of claims 1 to 7, wherein the total thickness of the multilayer film is in the range of 3 to 30 µm, preferably 4 to 15 µm.

9. A multilayer film as claimed in claim 8, wherein the outer layers each have a thickness of 0.3 to 2.0 µm, in particular in the range of 0.4 to 0.8 µm, and are preferably of the same thickness.

10. A multilayer film as claimed in either of claims 8 and 9, wherein the roughness $R_z$ is less than or equal to 1.5 µm and is especially in the range of 0.07 to 0.5 µm and wherein the roughnesses of the two outer surfaces are the same of different.

11. A multilayer film as claimed in any one of claims 1 to 10, wherein an outer metal layer has been added.

12. The use of a multilayer film as claimed in any one of claims 1 to 11 as an electrically insulating film, in particular as a dielectric in an electrical foil capacitor.

**Revendications**

1. Feuille multicouche coextrudée, orientée biaxialement, comportant une couche de base formée à partir d'une matière première de grande pureté pour feuilles d'isolation électrique et une couche externe sur une ou deux de ses faces, la couche de base et la (les) couche(s) externe(s) contenant des polymères de propylène et des stabilisants pour les polymères de propylène,
caractérisée en ce que la matière première de la couche de base utilisée présente une température d'oxydation thermique idéale comprise entre 260 et 300 °C, de préférence entre 260 et 280 °C, la matière première de la (des) couche(s) externe(s) présente une température d'oxydation thermique idéale comprise entre 240 et 300 °C, de préférence entre 240 et 270 °, et la feuille multicouche dans son ensemble présente une température d'oxydation thermique idéale comprise entre 250 et 290 °C, de préférence entre 250 et 275 °, et en ce que la teneur en agents neutralisants organiques, en particulier stéarate de calcium, dans les matières premières est inférieure ou égale a 100 ppm et la teneur en stabilisant dans chaque couche est égale ou inférieure a celle de la couche de base, de préférence égale ou inférieure a 50 % en poids par rapport à la teneur en stabilisant de la couche de base.

2. Feuille multicouche selon la revendication 1, caractérisée en ce que les matières premières pour la couche de base et la (les) couche(s) externe(s) sont constituées de polypropylène de grande pureté ou d'un mélange de polymères a base de polypropylène et d'autres polyoléfines, en particulier HDPE, LDPE, LLDPE ou poly(4-méthyl-1-pentène), ou bien de copolymères séquencés ou de copolymères du propylène, en particulier avec l'éthylène.

3. Feuille multicouche selon la revendication 1 ou 2, caractérisée en ce que les stabilisants pour les matières premières de la couche de base et de la (les) couche(s) externe(s) sont choisis dans les classes de substances englobant les thioéthers et/ou les phosphonites, de préférence les phénols à empêchement stérique et/ou les phosphites, ou des mélanges de ces substances.

4. Feuille multicouche selon la revendication 3, caractérisée en ce que le phénol à empêchement stérique présente une masse moléculaire supérieure à 300 g/mole, en particulier supérieure à 700 g/mole.

5. Feuille multicouche selon la revendication 4, caractérisée en ce que sa teneur en autres adjuvants organiques de masse moléculaire inférieure a 700 g/mole vaut au plus 0,1 % en poids.

6. Feuille multicouche selon une quelconque des revendications 1 à 5, caractérisée en ce que sa teneur résiduelle en cendres est inférieure à 50 ppm.

7. Feuille multicouche selon une quelconque des revendications 1 à 6, caractérisée en ce que sa teneur en chlore est inférieure à 10 ppm.

8. Feuille multicouche selon une quelconque des revendications 1 à 7, caractérisée en ce que son épaisseur totale est comprise entre 3 et 30 µm, de préférence entre 4 et 15 µm.

9. Feuille multicouche selon la revendication 8, caractérisée en ce que les couches externes présentent chacune une épaisseur comprise entre 0,3 et 2,0 µm, en particulier entre 0,4 et 0,8 µm, et sont de préférence à peu près de même épaisseur.

10. Feuille multicouche selon la revendication 8 ou 9, caractérisée en ce que la rugosité $R_z$ est inférieure ou égale à 1,5 µm et est de préférence comprise entre (0,07 et 0,5 µm, et que les deux surfaces externes présentent une rugosité identique ou différente.

11. Feuille multicouche selon une quelconque des revendications 1 à 10, caractérisée en ce qu'on lui a adjoint une couche métallique externe.

12. Utilisation de la feuille multicouche selon une quelconque des revendications 1 à 11 comme feuille d'isolation électrique, en particulier comme diélectrique dans un condensateur électrique à feuilles.

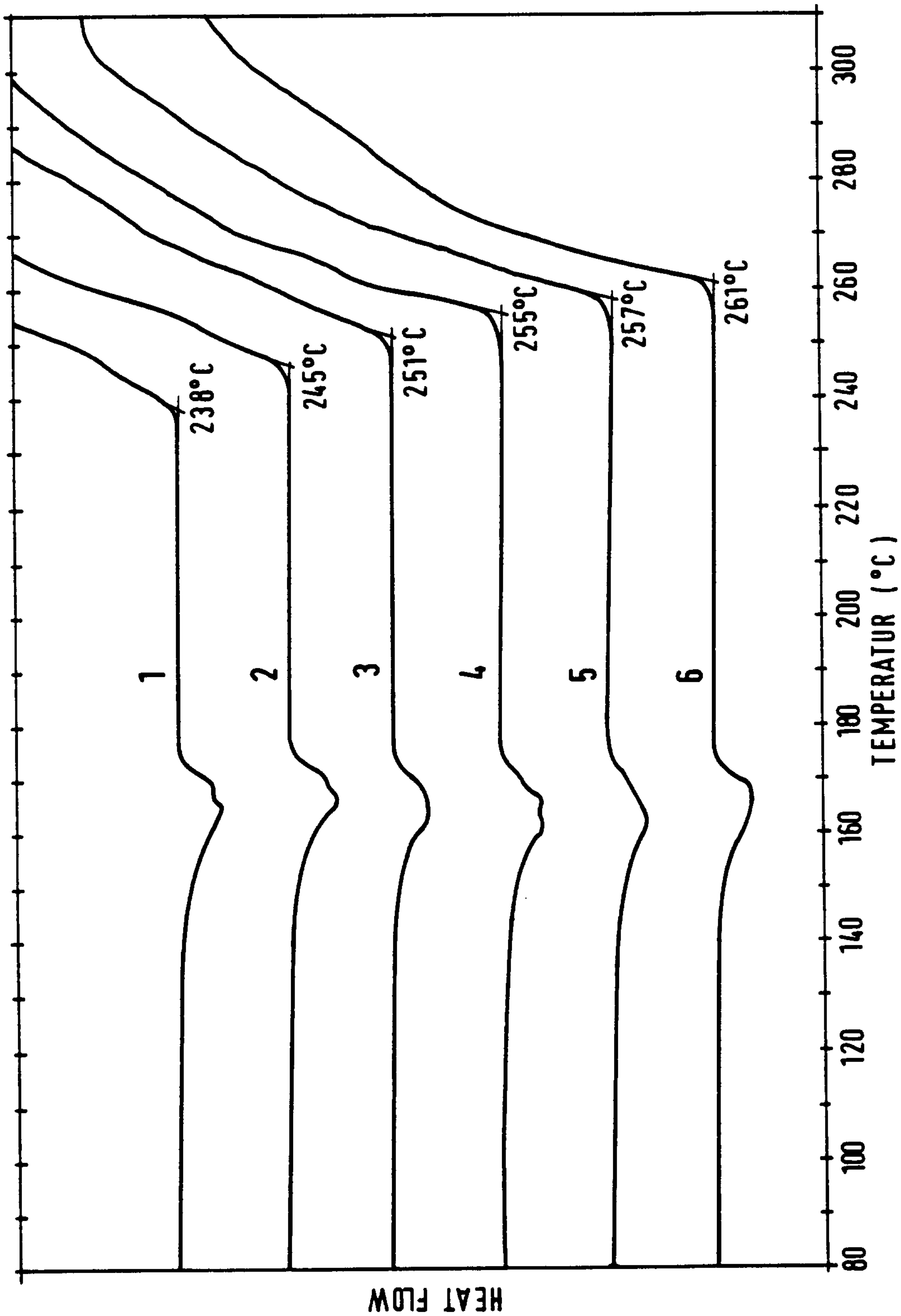
1
2
3
4
5
6
238°C
245°C
251°C
255°C
257°C
261°C
HEAT FLOW
TEMPERATUR (°C)
80
100
120
140
160
180
200
220
240
260
280
300